# EUROPEAN PATENT SPECIFICATION

(11) **EP 0 638 223 B1**
(45) Date of publication and mention of the grant of the patent: **27.10.1999**
(21) Application number: 93908979.3
(22) Date of filing: 23.04.1993
(51) Int. Cl.: H04Q 11/04, H04J 3/06

(54) **A METHOD AND A CROSS-CONNECTION ARCHITECTURE FOR ERROR-FREE CHANGE-OVER OF A CROSS-CONNECTION MATRIX**
VERFAHREN UND QUERVERBINDUNGSARCHITEKTUR FÜR EINE FEHLERFREIE UMSCHALTUNG EINERQUERVERBINDUNGSKOPPELMATRIX
PROCEDE ET AGENCEMENT DE CONNEXION TRANVERSALE POUR UNE COMMUTATION EXEMPTE D'ERREURS D'UNE MATRICE DE CONNEXION TRANSVERSALE

(30) Priority: 23.04.1992 FI 921823
(43) Date of publication of application: 15.02.1995
(73) Proprietor: NOKIA TELECOMMUNICATIONS OY, 02601 Espoo (FI)
(72) Inventor: KLINE, Eric, FIN-02120 Espoo (FI); ALATALO, Hannu, FIN-90120 Oulu (FI); SUVITAIVAL, Pekka, FIN-01590 Maisala (FI); NIEMINEN, Juhani, FIN-02620 Espoo (FI)
(74) Representative: Hamilton, Alistair
(86) International application number: FI9300172
(87) International publication number: WO9322886

(56) References cited:
- US-A- 4 804 956
- US-A- 4 998 242

## Description

The invention relates to a method according to the introduction of claim 1 for error-free change-over of the cross-connection matrix in a cross-connect for digital transmission lines, the cross-connection matrix containing the routing information through the cross-connect. If the cross-connection matrix change-over is asynchronous there occurs unacceptable errors in the cross-connection.

The synchronous digital hierarchy (SDH) comprises an entirety, quite extensive and planned for advanced development, for the transmission of digital signals in the telecommunications network, the trunk network of which is evolving from separate PCM coded links towards a remotely controlled cross-connection network. The recommendation CCITT G.707 specifies signals with a transmission rate of 155.520 Mbit/s for the Synchronous Transport Module (STM-1) of the first level SDH-signals. The basic STM-1 frame comprises bytes (8 bit), and their number is 2430 including the monitoring blocks; then one STM-1 frame will carry e.g. 63 subsystem containers (e.g. a TU-1, Tributary Unit, which can contain the 2 Mbit/s signal of a conventional 30 channel PCM system). The STM-1 frames are repeated 8000 times in a second, which is the same rate as in the subsystem; each byte of the frame forms then a 64 kbit/s channel. The SDH-signals or transport modules are created by interleaving the bytes of the subsystem signals. The frames are joined to form multiframes.

An SDH DXC can carry traffic between different SDH levels, and connect traffic between different signals. A typical higher level cross-connect (DXC, Digital Cross Connect, CCITT draft recommendations G.sdcx-1...-3) is the so called 4/1 cross-connect, in which 2 Mbit/s channels are connected between the incoming and outgoing ports. An important objective for the cross-connect is to optimize the utilization rate of the transmission network.

Further it must be able to perform a flexible reconfiguration of the network, i.e. to reroute the connections, and to guarantee a rapid start-up of stand-by connections in network failure situations. The mentioned CCITT SDH-recommendations intend to define the logical function, i.e. the functional structure of equipment, but they avoid a detailed description of the equipment structure.

In this respect US-A-4 804 956 discloses a space switch, where all addresses in the same stage of the switch are changed simultaneously, and where successive stages are changed in synchronism with successive ticks of the system clock.

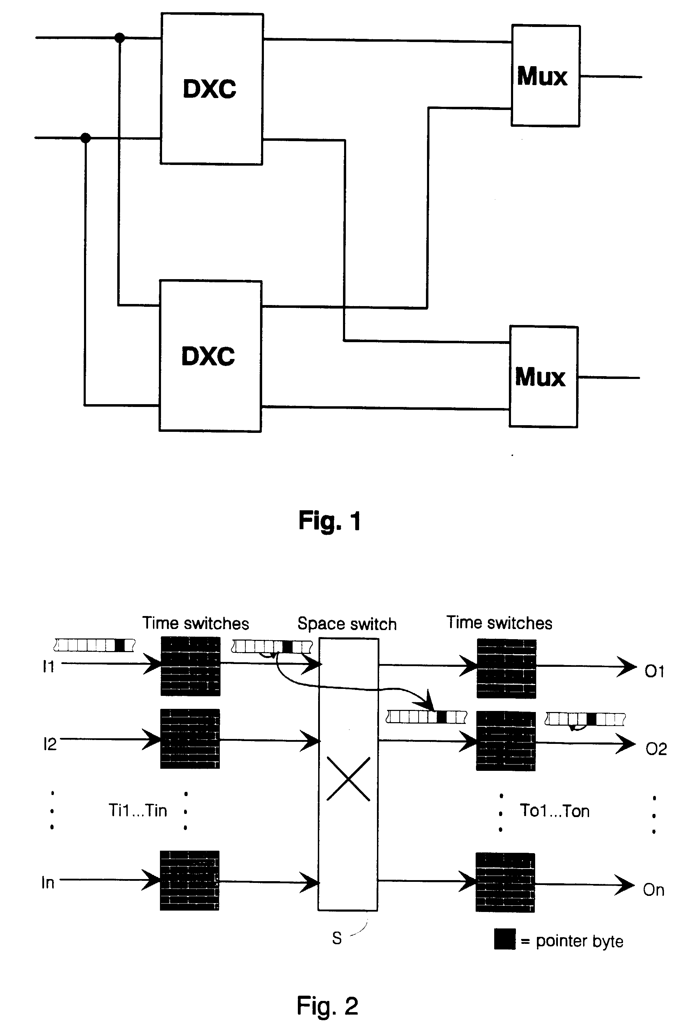

The digital cross-connect is much studied in order to find an architecture meeting optimal conditions. The TST (Time-Space-Time) cross-connect structure schematically shown in figure 1 is a structure which well meets conditions concerning capacity, which is non-blocking and which can be realized. The search for a non-blocking connection in the TST-switching structure is a task which requires extensive calculations, even though a TST-switch in principle is non-blocking. One factor leading to the extensive calculations is e.g. the large number of bytes or channels of the STM-N signals. An advantage of the TST architecture is that the size of the cross-connect can be dimensioned for the switching capacity required in each case, so that the equipment solution is more economical than for other architectures (e.g. S-T-S, etc.).

Traditional TST cross-connection architectures have a completely duplicated cross-connect, whereby the non-blocking connection is more advantageously calculated. At the same time an error-free change-over of a connection matrix can be realized. This situation is shown in figure 1 (prior art). In order to have a possibility for error-free change-over two separate, almost complete cross-connects DXC are provided, of which one is operating or active and the other in stand-by state. The incoming lines, e.g. N lines of STM-1 signals, are connected in parallel to the cross-connects. On the outgoing side the cross-connects are connected to multiplexers Mux. The multiplexers select the respective cross-connect DXC and receive from it signals which they connect to the outgoing line of the Mux. A central control constantly keeps an up-dated connection matrix ready for each DXC switch.

As an alternative to the solution of figure 1 it is known to arrange buffering of the incoming lines. At the speeds of the SDH systems and due to their large frame structure the buffering would require a huge memory, which in practice does not seem a reasonable embodiment. This is however made in e.g. telephone central offices, where 2 Mbit/s lines are connected to the cross-connect and where the objective is to rapidly create and disconnect channel-based connections between 2 Mbit/s lines. That is a low rate compared to e.g. SDH rates, where the distances between subracks and racks cause considerable delays of the transmitted signals. In the case of a TST switch in a central office a free route through the switch must be found within the limits of the time restrictions, whereby blocking could also be acceptable, because the blocking concerns only one channel at a time. A central office further uses synchronously operating equipment, whereby the synchronization is provided by buffering the incoming lines. The starting point of each frame is located at the same point in time as they are fed to the time switch on the incoming side. This guarantees the correct operation of the space switch. With the aid of a central control an up-dated connection matrix is constantly kept ready for each switch. When a cross-connection change-over is required, e.g. due to a failure in a switching element, the working matrix is marked as stand-by and the previous stand-by matrix is marked as active. The connection change-over can be made almost any time due to the synchronization.

A function like that of the central offices cannot be accepted for processing transmission paths in SDH cross-connects, where the incoming lines to the switch operate at rates over 155 Mbit/s. Transmission paths have long connection times, and the connections do not change rapidly. For the connection of transmission paths a basic condition is further the efficient utilization of the transmission paths and also of the cross-connection capacity, in contrast to central offices where an oversized capacity can be used to prevent blocking situations. Due to the high operating speed also the changing distances must be taken into account in the change-over of the connection matrix, because the transmission distance affects the coincidence of the bytes, i.e. their location can change temporally when a line is connected to a space switch in another rack.

The object of the invention is now, for error-free change-over of a cross-connection matrix, to demonstrate means, with which we can obviate prior art disadvantages, i.e. the large number of components and the required space caused by the duplication.

The invention is based on the observation that a duplication of the time switches on the incoming and the outgoing sides is not necessary as such, because each time switch serves one transmission line. However, in order to guarantee the reliability it would be possible to arrange a redundancy of the N+1 type, e.g. so that there is one common stand-by switch for five switches. The space switch must however be duplicated because of reliability reasons, because it is a central means and common to the entire cross-connect. Another observation is that according to the SDH specifications the signal locations in a frame are marked by pointers in the administrative blocks.

The problem presented by the objective can be reduced so, that it must be possible to direct a command for cross-connection matrix change-over to all modules in the cross-connect, so that for an error-free change-over it is secured that the cross-connect maintains the synchronization, in other words that the change-over occurs at the correct moment in all switches.

The presented task is solved by the characteristics of claim 1. An essential condition is that the entire cross-connect or all cross-connect modules - the time and space switches - always are synchronized to a certain reference clock, e.g. to the sync of a multiframe received on a line. All logical connections are made on the basis of this timing reference. Another essential feature is that according to the invention the actual action command to implement the connection matrix is sent together with the signal flow to be connected. This secures a correctly timed function of all modules. The action command is triggered by a special timing pulse which is transmitted to all synchronization circuits of the incoming lines, whereby these synchronization circuits send the action command at a predetermined point in the signal frame. An action command propagating within the signal flow ensures that first the time switches on the incoming side, then the space switch and finally the time switches on the outgoing side, respectively, change-over to the new cross-connection matrix and begin to use it. Thus the operation of all switches can continue without errors. Preferred embodiments of the invention are presented in the subclaims.

The cross-connection architecture according to the invention has a common synchronization from a selected reference clock for all switches of the cross-connect. We can further connect to the sync bus a special change-over pulse, which triggers the connection matrix change-over actions.

The invention is described below with reference to the enclosed figures.
- Figure 1: shows schematically the duplication of a cross-connect according to a known solution.
- Figure 2: shows schematically the principle of the time-space-time cross-connect.
- Figure 3: illustrates the embodiment of a cross-connect according to the invention.
- Figure 4: is a more detailed block diagram of the cross-connect according to the invention.
- Figure 5: shows the contents of the section overhead blocks in the STM-N frame structure and particularly the selected location for the connection matrix change-over byte.
- Figure 6: shows the contents of the connection matrix change-over byte, figure 6a showing a change-over command and figure 6b showing the situation without a change-over command.
- Figure 7: shows the synchronization signals on the sync bus, figure 7a having a normal multiframe sync signal, and in figure 7b there is attached a matrix change-over command according to the invention.

Figure 2 illustrates in principle the structure and function of a time-space-time cross-connect, which is used also in the invention. The incoming signals I1...In (here STM-1 signals) are on the left and the output signals (O1...On) on the right. Each line has its own time switch. The time switches Til...Tin and Tol...Ton of the incoming and outgoing sides, respectively, interchange the locations of the time slots or bytes (within a frame) in the signal. The central space switch S transmits a byte of a signal from one time switch to a signal going to another time switch. A time slot or byte forms a 64 kbit/s channel. The time switches are basically memory elements and the space switch is formed by switch elements. The cross-connect is generally realized as a module structure and as a bidirectional unit. The control processor (not shown) of the cross-connect in figure 2 is able to perform a synchronous change-over of the incoming and outgoing time switches and the connection matrix (CM) of the space switch, so that the time and space switches can be totally reconfigured to correspond to the new connection configuration in a situation where the connection configuration changes. Thus the processor has a connection matrix actually in operation and a stand-by connection matrix being in stand-by or being processed, whereby the matrices are e.g. certain memory blocks of the processor. The configuration calculator has as basic data the channel distribution at the inputs and the desired outgoing lines for the channels. With the aid of a selected configuration method the configuration calculator of the processor controlling the cross-connect generates the new configuration, which is stored into the stand-by matrix used to realize the updated connection configuration. In the configuration we preferably utilize division of the signal frame into periods, which e.g. correspond to the TU-12 containers, and select the connection routes on the basis of time slots.

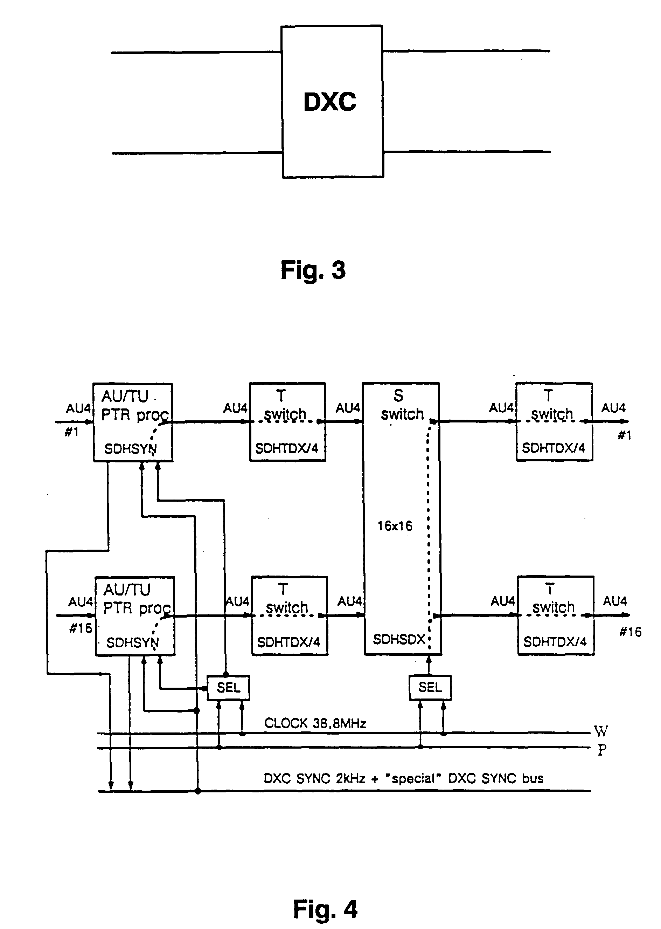

The cross-connect according to the invention is symbolically shown in figure 3.

Figure 4 shows a cross-connection architecture, where the timings required in the invention are taken into account. In the same way as in figure 2 we have here time switches (T switch) and a space switches (S switch). The space switch in this example is a space switch which connects in total 16 STM-1 incoming lines to 16 outputs. In front of the input time switches into each of the 16 lines is connected an interface module or a synchronization circuit AU/TU (AU/TU pointer proc.), to which the transmission line through an interface unit (not shown) supplies an STM-1 signal in AU-4 format having 4 frames. The cross-connect clock (CLOCK) W operating at the frequency 38.8 MHz is connected to the synchronization circuits AU/TU and to the space switch S via the selection means SEL. The space switch is duplicated (not shown). There is one time switch for each line, and in groups they have common spare switches (not shown).

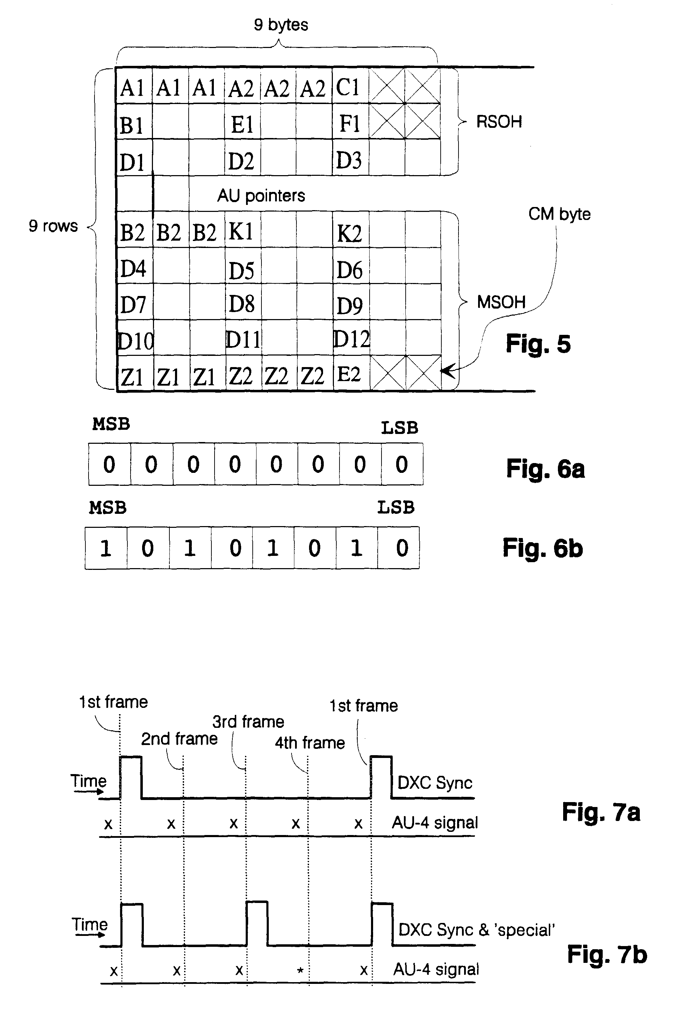

The frame synchronization of the cross-connection is supplied via the bus DXC Sync to the AU/TU circuits, which preferably are realized as ASIC circuits, as are the time and space switches. According to the invention the DXC Sync bus also forwards a connection matrix change-over signal "special", which will be described in more detail below with reference to figure 7 which shows the pulses generated in a multiframe and in which the beginnings of each four frames in the multiframe have been marked. The synchronization reference of the cross-connect is preferably taken from a selected circuit AU/TU and it is distributed to all other AU/TU circuits through the DXC Sync bus which interconnects them, whereby all logical connections are made on the basis of this timing reference (figure 7a) by manipulating the signal pointers in the AU/TU circuits. The AU-4 signal in figure 7a represents the synchronization clock, to which the cross-connect is locked (value 522 of the AU-4 pointer). Alternatively some other suitable clock or reference source (not shown) can be used for the synchronization.

In order to have an error-free change-over of a connection matrix we first calculate the required new connection matrix, as mentioned above. When the connection configuration is ready, or when it must be taken into use, a "special" pulse is generated on the synchronization bus DXC Sync, e.g. at the beginning of the third frame in the multiframe, as is shown in figure 7b. This 'special' signal in one single pulse, which is transmitted only to indicate when a change-over of the connection matrix is desired, and which in this case triggers the transmission of the action commands from each AU/TU circuit for the actual change-over of a connection matrix.

In each AU/TU circuit the 'special' pulse triggers an action to set the byte CM to a selected state in the AU-4 signal's section overhead block (SOH, Section OverHead), the byte CM indicating the action of a memory page change-over, i.e. a connection matrix change-over. In this example the selected byte CM (CM, Change Memory) is located in the MSOH block, in the ninth byte, on the ninth row in each multiframe, as figure 5 shows. Figure 6 shows the states of byte CM, where MSB stands for the Most Significant Bit and LSB stands for the Least Significant Bit. Figure 6a shows the combination '10101010', which is the connection matrix change-over command. This CM byte has in figure 7a and 7b been marked with an X. Figure 6b shows the combination for normal operation '00000000', which does not require a memory page change-over and this CM byte has in figure 7b been marked with a *. All time switches and space switches constantly monitor the status of this byte. When a time switch/space switch observes a change-over command it immediately begins to use the new connection matrix.

We can divide the connection matrix change-over according to the invention into two steps:
1) a signal 'special' is transmitted to all synchronization circuits AU/TU to prepare the change-over; and
2) a data sequence indicating a change-over command is sent from the AU/TU circuits within the signal flow in a defined byte of a frame.

When we examine closer figure 7b we find that the 'special' signal and the connection matrix change-over command CM=10101010 are transmitted in the same frame, during the third frame.

We can specify the above said so that in order to change-over the connection matrix on the basis of the byte CM=10101010 the processor of the cross-connect must first write or copy a new connection matrix to all time and space switches, i.e. into their control memories. Then the controlling processor transmits a command to the reference clock, e.g. a 'master' AU/TU circuit, based on the command this AU/TU circuit transmits simultaneously to all AU/TU circuits a 'special' pulse via the DXC Sync bus. Then the AU/TU circuits transmit through the cross-connect the payload data and together with it in the section overhead block the memory page change-over byte CM=10101010, which in the respective receiving switches performs the memory page or the connection matrix change-over during the section overhead block.

The method according to the invention guarantees an error-free change-over of the connection matrix. The synchronization made in the above described way provides a possibility to recognize the logical timing of the signals, and no delay of an entire frame/multiframe is required on the incoming side of the cross-connect.

In this description the synchronization of the cross-connect is described in a simplified way. In order to have a reliable synchronization it could in practice be necessary to take into account in the logical connection the delays between the switching elements, and this can be made with suitable methods when the cross-connect is taken into use. The mutual delay differences between the transmission paths must be observed in a suitable way, e.g. by arranging a short buffer on the incoming lines of the space switch, whereby the buffer length is sufficient to correct a delay difference of e.g. ±4 clock periods.

Based on the above description a person skilled in the art will understand that the method according to the invention can find applications in different variations. Thus the principle according to the invention may be applied to different signals to be cross-connected, of which the STM-1 mentioned above is one example. The principle is suitable to be used also in other multilevel cross-connects, the S-T-S being one example. The cross-connect could be of an arbitrary size. The change memory byte could be placed in some other free byte location, e.g. in the section overhead block (SOH, RSOH, MSOH), or in the path overhead block (POH).

## Claims

1. A method for error-free change-over of a cross-connection matrix in situations of changing cross-connection requirements, whereby the cross-connect for digital transmission lines comprises a control logic, which through an interconnecting bus controls time and space switches, and which for each case calculates a new connection matrix, and whereby the incoming signal flows (AU4 #1...#16) containing a logical frame structure (AU-4) are connected to the cross-connect through interface modules (AU/TU), **characterized** in that
- the interface modules (AU/TU) are logically synchronized by a reference clock (DXC Sync), on the basis of which the logical connections are made,
- as a preparation for a change-over of the connection matrix the control logic distributes new connection matrices to the switching elements (T, S) and transmits via the synchronization bus (DXC Sync) a preparatory synchronization pulse (DXC Sync 'special') when the calculation of a new connection matrix is finished; and that
- triggered by this synchronization pulse ('special') the interface modules (AU/TU) attach a connection matrix change-over command (CM) into a predetermined location of the signal flow (AU-4) from the interface module (AU/TU), whereby
- the change-over command (CM) propagates with the signal (AU-4) through the time (T) and space (S) switches, in which the change-over command (CM) causes a respective change-over of the connection matrix in synchronism with the signal (AU-4) frame structure.

2. A method according to claim 1, **characterized** in that the incoming signal flow comprises a multiframe structure, whereby the control logic transmits the said synchronization pulse ('special') in the beginning of a predetermined frame in the multiframe structure.

3. A method according to claim 2, **characterized** in that the control logic transmits the said synchronization pulse ('special') in the beginning of the third frame of a multiframe structure comprising four frames.

4. A method according to claim 3, **characterized** in that the interface modules (AU/TU) are synchronized by a reference clock provided by a reference source (AU/TU 'master') via the synchronization bus (DXC Sync), the reference clock corresponding to the beginning of the first frame in the multiframe.

5. A method according to one of the preceding claims, **characterized** in that the change-over command (CM) is transmitted in a predetermined free byte of the monitoring block of the frame.

6. A method according to one of the preceding claims, **characterized** in that it is used in a multilevel cross-connect of an arbitrary size.

7. A cross-connection architecture for the error-free change-over of a cross-connection matrix in situations of changing cross-connection requirements, whereby the cross-connect for digital transmission lines comprises a control logic, which through an interconnecting bus controls time (T) and space (S) switches, and which for each case calculates a new connection matrix, and whereby the incoming signal flows (AU4 #1...#16) containing a logical frame structure (AU-4) are connected to the cross-connect through interface modules (AU/TU), **characterized** in that
- to the cross-connect interface modules (AU/TU) is connected a reference clock (DXC Sync), on the basis of which the interface module (AU/TU) calculates the pointer values of the signals (AU-4),
- the control logic includes a memory, into which the connection matrices calculated by the control logic are stored, and from which they before a change-over of the connection matrix are transmitted to the switching means via a bus,
- the control logic includes means to transmit a preparatory synchronization pulse (DXC Sync 'special') via the synchronization bus (DXC Sync) at the beginning of a defined frame when the calculation of a new connection matrix is finished; and that
- each interface module (AU/TU) has means controlled by an algorithm, which triggered by the said synchronization pulse ('special') attach a connection matrix change-over byte (CM) to a predetermined location of the signal flow (AU-4) from the interface module (AU/TU), whereby
- the change-over command (CM) propagates with the signal (AU-4) through the time (T) and space (S) switches, in which the change-over command (CM) causes a respective change-over of the connection matrix in synchronism with the signal (AU-4) frame structure.

8. A cross-connection architecture according to claim 7, **characterized** in that on the synchronization bus (DXC Sync) a pulse is transmitted as multiframe synchronization at a frequency of 2 kHz in the beginning of each multiframe (AU-4) and a pulse (DXC Sync 'special') triggering the change-over is transmitted in the beginning of the third frame.

9. A cross-connection architecture according to claim 7 or 8, **characterized** in that the reference source of the synchronization is a predetermined interface module (AU/TU 'master'), which from the incoming signal flow (AU4 #1...#16) receives a multiframe synchronization and distributes it to the other interface modules (AU/TU) via the synchronization bus (DXC Sync).

10. A cross-connection architecture according to one of the preceding claims 6 - 8, **characterized** in that the cross-connect comprises a time-space-time cross-connect (T - S - T), and that the signal flows (AU4 #1...#16) to be connected are preferably signals (AU-4) according to the synchronous digital hierarchy.

## Patentansprüche

1. Verfahren für das fehlerfreie Umschalten einer Kreuzschaltungsmatrix in Situationen geänderter Kreuzschaltungserfordernisse, wobei die Kreuzschaltung für digitale Übertragungsleitungen eine Steuerlogik umfaßt, aie durch einen Verbindungsbus Zeit- und Raumschalter steuert und die für jeden Fall eine neue Verbindungsmatrix berechnet, und wobei die hereinkommenden Signalflüsse (AU4 Nr. 1....Nr.16), die eine logische Rahmenstruktur (AU-4) enthalten, durch Schnittstellenmodule (AU/TU) an die Kreuzschaltung angeschlossen sind, dadurch gekennzeichnet, daß
- die Schnittstellenmodule (AU/TU) durch einen Bezugstakt ( DXC Sync) logisch synchronisiert sind, auf dessen Basis die logischen Verbindungen gemacht werden,
- als Vorbereitung für ein Umschalten der Verbindungsmatrix die Steuerlogik neue Verbindungsmatrizen an die Umschaltelemente (T, S) verteilt und über den Synchronisationsbus (DXC Sync) einen vorbereitenden Synchronisationsimpuls (DXC Sync "spezial") überträgt, wenn die Berechnung der neuen Verbindungsmatrix abgeschlossen ist; und daß
- getriggert durch diesen Synchronisationsimpuls ("spezial") die Schnittstellenmodule (AU/TU) einen Verbindungsmatrix-Umschalt-Befehl (CM) an einer vorbestimmten Position des Signalflusses (AU-4) vom Schnittstellenmodul (AU/TU) anhängen, wodurch
- sich der Umschaltbefehl (CM) mit dem Signal (AU-4) durch die Zeit- (T) und Raum- (S) Schalter verbreitet, in denen der Umschaltbefehl (CM) ein jeweiliges Umschalten der Verbindungsmatrix synchron mit der Signal- (AU-4) Rahmenstruktur bewirkt.

2. Verfahren nach Anspruch 1, dadurch gekennzeichnet, daß der hereinkommende Signalfluß eine Mehrfachrahmen-Struktur umfaßt, wobei die Steuerlogik den Synchronisationsimpuls ("spezial") am Beginn eines vorbestimmten Rahmens in der Mehrfachrahmen-Struktur überträgt.

3. Verfahren nach Anspruch 2, dadurch gekennzeichnet, daß die Steuerlogik den Synchronisationsimpuls ("spezial") am Beginn des dritten Rahmens einer Mehrfachrahmen-Struktur überträgt, die vier Rahmen umfaßt.

4. Verfahren nach Anspruch 3, dadurch gekennzeichnet, daß die Schnittstellenmodule (AU/TU) durch einen Bezugstakt synchronisiert werden, der von einer Bezugsquelle (AU/TU "master") über den Synchronisationsbus (DXC Sync) bereitgestellt wird, wobei der Bezugstakt mit dem Beginn des ersten Rahmens im Mehrfach rahmen korrespondiert.

5. Verfahren nach einem der vorangegangenen Ansprüche, dadurch gekennzeichnet, daß der Umschalt-Befehl (CM) in einem vorbestimmten freien Byte des Überwachungsblocks des Rahmens übertragen wird.

6. Verfahren nach einem der vorangegangenen Ansprüche, dadurch gekennzeichnet, daß es in einer Multilevel-Kreuzschaltung beliebiger Größe eingesetzt wird.

7. Kreuzschaltungsarchitektur für das fehlerfreie Umschalten einer Kreuzschaltungmatrix in Situationen geänderter Kreuzschaltungserfordernisse, wobei die Kreuzschaltung für digitale Übertragungsleitungen eine Steuerlogik umfaßt, die durch einen Verbindungsbus Zeit- (T) und Raum- (S) Schalter steuert und die für jeden Fall eine neue Verbindungsmatrix berechnet, und wobei die hereinkommenden Signalflüsse (AU4 Nr. 1....Nr.16), die eine logische Rahmenstruktur (AU-4) enthalten, durch Schnittstellenmodule (AU/TU) an die Kreuzschaltung angeschlossen sind, dadurch gekennzeichnet, daß
- an die Kreuzschaltungs-Schnittstellenmodule (AU/TU) ein Bezugstakt (DXC Sync) angeschlossen ist, auf dessen Basis das Schnittstellenmodul (AU/TU) die Pointer-Werte der Signale (AU-4) berechnet,
- die Steuerlogik einen Speicher umfaßt, in dem die durch die Steuerlogik berechneten Verbindungsmatrizen gespeichert werden, und aus dem sie vor einem Umschalten der Verbindungsmatrix über einen Bus zu den Umschaltmitteln übertragen werden,
- die Steuerlogik Mittel zum Übertragen eines vorbereitenden Synchronisationsimpulses (DXC Sync "spezial") über den Synchronisationsbus (DXC Sync) am Beginn eines definierten Rahmens umfaßt, wenn die Berechnung der neuen Verbindungsmatrix abgeschlossen ist; und daß
- jedes Schnittstellenmodul (AU/TU) durch einen Algorithmus gesteuerte Mittel aufweist, die durch den Synchronisationsimpuls ("spezial") getriggert ein Verbindungsmatrix-Umschalt-Byte (CM) an einer vorbestimmten Position des Signalflusses (AU-4) vom Schnittstellenmodul (AU/TU) anhängen, wodurch
- sich der Umschalt-Befehl (CM) mit dem Signal (AU-4) durch die Zeit- (T) und Raum- (S) Schalter verbreitet, in denen der Umschalt-Befehl (CM) ein jeweiliges Umschalten der Verbindungsmatrix synchron mit der Signal- (AU-4) Rahmenstruktur bewirkt.

8. Kreuzschaltungsarchitektur nach Anspruch 7, dadurch gekennzeichnet, daß auf dem Synchronisationsbus (DXC Sync) am Beginn eines jeden Mehrfachrahmens (AU-4) ein Impuls als Mehrfachrahmen-Synchronisation mit einer Frequenz von 2 kHz übertragen wird und am Beginn des dritten Rahmens ein Impuls (DXC Sync "spezial") übertragen wird, der das Umscnalten triggert.

9. Kreuzschaltungsarchitektur nach Anspruch 7 oder 8, dadurch gekennzeichnet, daß die Bezugsquelle der Synchronisation ein vorbestimmtes Schnittstellenmodul (AU/TU "master") ist, das vom hereinkommenden Signalfluß (AU4 Nr.1... Nr.16) eine Mehrfachrahmen-Synchronisation empfängt und sie über den Synchronisationsbus (DXC Sync) an die anderen Schnittstellenmodule (AU/TU) verteilt.

10. Kreuzschaltungsarchitektur nach einem der Ansprüche 6 bis 8, dadurch gekennzeichnet, daß die Kreuzschaltung eine Zeit-Raum-Zeit-Kreuzschaltung (T-S-T) umfaßt und daß die zu verbindenden Signalflüsse (AU4 Nr.1 .... Nr.16) vorzugsweise Signale (AU-4) gemäß der synchronen digitalen Hierarchie sind.

## Revendications

1. Procédé pour une commutation exempte d'erreurs d'une matrice de connexion transversale dans des situations de changer des exigences de connexion transversale, de la sorte la connexion transversale pour des lignes de transmission numérique comprend une logique de contrôle, qui par un bus d'interconnexion contrôle des commutateurs de temps et d'espace, et qui pour chaque cas calcule une nouvelle matrice de connexion, et de la sorte les circulations de signaux d'entrée (AU4 #1...#16) contenant une structure de trame logique (AU-4) sont reliées à la connexion transversale par des modules d'interface (AU/TU), **caractérisé** en ce que
- les modules d'interface (AU/TU) sont logiquement synchronisés par une horloge de référence (DXC Sync), sur la base de laquelle les connexions logiques sont effectuées,
- comme préparation pour une commutation de la matrice de connexion, la logique de contrôle distribue des nouvelles matrices de connexion aux éléments de commutation (T, S) et transmet par l'intermédiaire du bus de synchronisation (DXC Sync) une impulsion de synchronisation de préparation (DXC Sync 'spécial') lorsque le calcul d'une nouvelle matrice de connexion est fini; et en ce que
- déclenchés par cette impulsion de synchronisation ('spécial'), les modules d'interface (AU/TU) attachent une commande de commutation de matrice de connexion (CM) dans un emplacement prédéterminé de la circulation de signal (AU-4) à partir du module d'interface (AU/TU), de la sorte
- la commande de commutation (CM) se propage avec le signal (AU-4) à travers les commutateurs de temps (T) et d'espace (S), dans lesquels la commande de commutation (CM) provoque une commutation respective de la matrice de connexion en synchronisme avec la structure de trame de signal (AU-4).

2. Procédé selon la revendication 1, **caractérisé** en ce que la circulation de signal d'entrée comprend une structure multitrames, de la sorte la logique de contrôle transmet l'impulsion de synchronisation précitée ('spécial') au début d'une trame prédéterminée dans la structure multitrames.

3. Procédé selon la revendication 2, **caractérisé** en ce que la logique de contrôle transmet l'impulsion de synchronisation précitée ('spécial') au début de la troisième trame d'une structure multitrames comprenant quatre trames.

4. Procédé selon la revendication 3, **caractérisé** en ce que les modules d'interface (AU/TU) sont synchronisés par une horloge de référence fournie par une source de référence (AU/TU 'maître') par l'intermédiaire du bus de synchronisation (DXC Sync), l'horloge de référence correspondant au début de la première trame dans la multitrame.

5. Procédé selon l'une des revendications précédentes, **caractérisé** en ce que la commande de commutation (CM) est transmise dans un octet libre prédéterminé du bloc de contrôle de la trame.

6. Procédé selon l'une des revendications précédentes, **caractérisé** en ce qu'il est utilisé dans une connexion transversale multiniveaux d'une dimension arbitraire.

7. Architecture de connexion transversale pour la commutation exempte d'erreurs d'une matrice de connexion transversale dans des situations de changer des exigences de connexion transversale, de la sorte la connexion transversale pour des lignes de transmission numériques comprend une logique de contrôle, qui par un bus d'interconnexion contrôle des commutateurs de temps (T) et d'espace (S) et qui pour chacun calcule une nouvelle matrice de connexion, et de la sorte les circulations de signaux d'entrée (AU4 #1...#16) contenant une structure de trame logique (AU-4) sont connectés à la connexion transversale par des modules d'interface (AU/TU), **caractérisée** en ce que
- aux modules d'interface de connexion transversale (AU/TU) est reliée une horloge de référence (DXC Sync), sur la base de laquelle le module d'interface (AU/TU) calcule les valeurs de pointeur des signaux (AU-4),
- la logique de contrôle comprend une mémoire, dans laquelle les matrices de connexion calculées par la logique de contrôle sont mémorisées et à partir de laquelle, avant une commutation de la matrice de connexion elles sont transmises au moyen de commutation par l'intermédiaire d'un bus,
- la logique de contrôle comprend un moyen pour transmettre une impulsion de synchronisation de préparation (DXC Sync 'spécial') par l'intermédiaire du bus de synchronisation (DXC Sync) au début d'une trame définie lorsque le calcul d'une nouvelle matrice de connexion est terminé; et en ce que
- chaque module d'interface (AU/TU) a un moyen contrôlé par un algorithme, qui déclenché par ladite impulsion de synchronisation ('spécial') attache un octet de commutation de matrice de connexion (CM) à un emplacement prédéterminé de la circulation de signal (AU-4) à partir du module d'interface (AU/TU), de la sorte
- la commande de commutation (CM) se propage avec le signal (AU-4) à travers les commutateurs de temps (T) et d'espace (S), dans lesquels la commande de commutation (CM) provoque une commutation respective de la matrice de connexion en synchronisme avec la structure de trame de signal (AU-4).

8. Architecture de connexion transversale selon la revendication 7, **caractérisée** en ce que sur le bus de synchronisation (DXC Sync) une impulsion est transmise comme synchronisation multitrames à une fréquence de 2 kHz au début de chaque multitrame (AU-4) et une impulsion (DXC Sync 'spécial') déclenchant la commutation est transmise au début de la troisième trame.

9. Architecture de connexion transversale selon la revendication 7 ou 8, **caractérisée** en ce que la source de référence de la synchronisation est un module d'interface prédéterminé (AU/TU 'maître'), qui à partir de la circulation de signal d'entrée (AU4 #1...#16) reçoit une synchronisation multitrames et la distribue aux autres modules d'interface (AU/TU) par l'intermédiaire du bus de synchronisation (DXC Sync).

10. Architecture de connexion transversale selon l'une des revendications précédentes 6-8, **caractérisée** en ce que la connexion transversale comprend une connexion transversale temps-espace-temps (T-S-T) et en ce que les circulations de signaux (AU4 #1...#16) à connecter sont de préférence des signaux (AU-4) selon la hiérarchie numérique synchrone.
